# EUROPÄISCHE PATENTANMELDUNG

(11) **EP 4 671 002 A1**
(43) Veröffentlichungstag der Anmeldung: **31.12.2025**
(21) Anmeldenummer: 24185433.0
(22) Anmeldetag: 28.06.2024
(51) Int. Cl.: B60C 5/02, B60C 5/14, B60C 29/00

(54) **FAHRRADREIFEN, INSBESONDERE SCHLAUCHLOSER FAHRRADREIFEN, UND DESSEN VERWENDUNG SOWIE KIT-OF-PARTS, UMFASSEND DEN FAHRRADREIFEN, EIN FAHRRADLAUFRAD, UMFASSEND DEN FAHRRADREIFEN, UND EIN VERFAHREN ZUR HERSTELLUNG DES FAHRRADREIFENS**

(71) Anmelder: REVERSE Components GmbH, 72250 Freudenstadt (DE)
(72) Erfinder: Schmid, Peter, 72250 Freudenstadt (DE); Kochendörfer, Sascha, 72280 Dornstetten (DE); Lenssens, Kristof, 74360 La Chapelle d'abondance (FR)
(74) Vertreter: Metten, Karl-Heinz

(57) **Zusammenfassung**

Die vorliegende Erfindung betrifft einen Fahrradreifen, insbesondere schlauchlosen Fahrradreifen, umfassend eine Reifenkarkasse sowie eine dehnbare, den Bereich zwischen erster und zweiter Felgenwulst überbrückende Folie, wobei sich ein nicht mit der Innenseite von erster und zweiter Seitenwand verbundener Abschnitt der dehnbaren Folie zwischen dem zum Felgenwulstabschluss der ersten Felgenwulst ausgerichteten Ende des ersten Verbindungsbereichs und dem zum Felgenwulstabschluss der zweiten Felgenwulst ausgerichteten Ende des zweiten Verbindungsbereichs erstreckt. Ferner betrifft die Erfindung ein Fahrradlaufrad, umfassend den erfindungsgemäßen Fahrradreifen und eine Fahrradfelge. Außerdem betrifft die Erfindung ein Verfahren zur Herstellung des erfindungsgemäßen Fahrradreifens sowie dessen Verwendung für Gravelbike- und/oder Mountainbike-Laufräder. Schließlich betrifft die Erfindung ein Kit-of-parts, umfassend einen dehnbaren Folienstreifen mit einen integrierten Ventilfuß und B) einen Kleber.

## Beschreibung

Die vorliegende Erfindung betrifft einen Fahrradreifen, insbesondere einen schlauchlosen Fahrradreifen, und dessen Verwendung sowie ein Kit-of-parts, umfassend den Fahrradreifen und eine Fahrradfelge. Ferner betrifft die Erfindung ein Fahrradlaufrad, umfassend den Fahrradreifen, und ein Verfahren zur Herstellung des Fahrradreifens.

Fahrradreifen sind mitunter sehr hohen Belastungen ausgesetzt. Dies trifft z.B. auf E-Bikes zu, die regelmäßig sehr stabil und damit gewichtssteigernd gebaut sind und zudem bedingt durch die integrierten Akkus schon bei geringen Geschwindigkeiten über ein hohes Trägheitsmoment verfügen. Sehr hohe mechanische Belastungen haben auch Fahrradreifen von Mountainbikes auszuhalten, insbesondere auch bei Abfahrten über unwegiges Gelände. In einem besonderen Maße werden Fahrradreifen von Mountainbikes in Anspruch genommen, mit denen, insbesondere wettkampfmäßig, Downhill-Rennen bestritten werden. Bei diesen Mountainbikes werden die Reifen gezielt mit relativ geringen Drücken, z.B. im Bereich von 1,0 bis 1,8 bar, gefahren, um eine ausgeprägte Griffigkeit mit dem Untergrund sicherzustellen. Viele Mountainbike-Fahrer, insbesondere auch diejenigen, die anspruchsvolle Downhill-Passagen fahren möchten, nutzen in verstärktem Maße aufgrund des angenehmeren Fahrverhaltens und aus sicherheitstechnischen Aspekten schlauchlose Fahrradreifen, sogenannte Tubeless-Reifen. Die Handhabung schlauchloser Fahrradreifen ist jedoch vielfach nicht trivial. Bereits beim ersten Befüllen mit Luft sind geeignete Pumpen zu verwenden, mit denen es gelingt, die Felgenwülste schnell genug gegen das Felgenhorn zu pressen, um einen Luftaustritt über den Zwischenraum zwischen Felgenwulst und Felgenhorn zu verhindern. Um die Dichtigkeit schlauchloser Fahrradreifen über einen längeren Zeitraum zu gewährleisten, ist in diese in regelmäßigen Abständen über das Ventil sogenannte Dichtmilch, d.h. eine wässrige Latexemulsion, einzufüllen. Hierfür ist regelmäßig die Luft komplett aus dem Reifen zu lassen, wodurch es passieren kann, dass Dichtmilch beim Befüllen über den Zwischenraum zwischen Felgenwulst und Felgenhorn nach außen gelangen kann. Als besonders störend wird insbesondere bei anspruchsvollen Downhill-Passagen bei Verwendung von schlauchlosen Fahrradreifen das sogenannte *Burping* empfunden. Durch die starke mechanische Beanspruchung wird temporär ein kleiner Spalt zwischen Felgenwulst und Felgenhorn erzeugt, durch den Luft austritt, was nicht selten den Abbruch der Fahrt zur Folge hat. Dieses Phänomen tritt besonders häufig bei Felgen bzw. Felgenhörnern auf, die aufgrund mechanischer Beschädigungen Dellen oder Einbuchtungen aufweisen.

In der DE 10 2020 201 474 B4 wird ein Fahrradreifen mit einer Reifenkarkasse beschrieben, der mit einer abschnittsweise von der Reifenkarkasse getrennten Luftkammerschicht ausgestattet ist, so dass zwischen der Luftkammerschicht und der Reifenkarkasse eine Luftkammer vorliegt. In der Luftkammer zwischen der Luftkammerschicht und der Reifenkarkasse muss eine Trennschicht angeordnet sein. Diese Trennschicht zwischen der Luftkammerschicht und der Reifenkarkasse soll eine klare Begrenzung der mit der Reifenkarkasse verbundenen Abschnitte der Luftkammerschicht und der von der Innenseite der Reifenkarkasse getrennten Abschnitte der Luftkammerschicht sicherstellen. Hierbei hat die Luftkammerschicht zunächst in Richtung der Abrollfläche mit den Seitenwänden der Reifenkarkasse verbunden zu sein, bevor sie benachbart zur Abrollfläche in einen Abschnitt übergeht, der mit der Trennschicht in Kontakt treten kann.

Aus der EP 3 511 181 A1 geht eine an einer Felge angeordnete ringförmige Reifenstruktur hervor, umfassend einen Reifenkörper, ein mit dem Reifenkörper verbundenes flexibles Dichtungselement in Form einer Auskleidung mit einem Durchgangsloch und einer Düse. Die Düse, umfassend eine Basis mit einem Schraubenloch sowie einen Ventilschaft mit einem Befestigungsende und einem Aufblaskanal, ist an dem flexiblen Dichtungselement derart angeordnet, dass ein Gas in einen Aufblasraum eintreten kann, und das Befestigungsende des Ventilschafts ist so gestaltet, dass es in das Schraubenloch eingeführt werden kann. Schließlich ist der Aufblaskanal so gestaltet, dass das Gas durch ihn hindurchtreten kann. Das Befestigungsende des Ventilschafts ragt nach dem Einsetzen in das Schraubenloch aus dem Durchgangsloch heraus, so dass der Aufblaskanal mit dem Aufblasraum in Verbindung steht. Mit der Reifenstruktur der EP 3 511 181 A1 soll sich die Verstopfung des Düsenkanals effektiv verhindern lassen.

Der vorliegenden Erfindung lag die Aufgabe zugrunde, Fahrradreifen, insbesondere schlauchlose Fahrradreifen, verfügbar zu machen, die nicht mehr mit den Nachteilen des Stands der Technik behaftet sind und die insbesondere die Gefahr des *Burping* reduzieren bzw. eliminieren helfen und die vorzugsweise auch das Einfüllen von Dichtmilch sicher und komplikationsfrei gestalten. Ferner lag der Erfindung in einer bevorzugten Ausgestaltung die Aufgabe zugrunde, Fahrradreifen, insbesondere schlauchlose Fahrradreifen, verfügbar zu machen, deren Seitenwände auch bei starker mechanischer Beanspruchung, insbesondere bei Kontakt mit dem Felgenhorn, nicht zur Leckage neigen.

Demgemäß wurde ein Fahrradreifen, insbesondere schlauchloser Fahrradreifen, gefunden, umfassend eine Reifenkarkasse mit einer Abrollfläche und, einander gegenüberliegend, einer ersten Seitenwand, die sich bis zu einer ersten Felgenwulst mit einem Felgenwulstbeginn und einem Felgenwulstabschluss erstreckt, und einer zweiten Seitenwand, die sich bis zu einer zweiten Felgenwulst mit einem Felgenwulstbeginn und einem Felgenwulstabschluss erstreckt, wobei die Reifenkarkasse eine Außenseite und eine Innenseite aufweist, ferner umfassend
mindestens eine, insbesondere reversibel, dehnbare, den Bereich zwischen erster und zweiter Felgenwulst überbrückende Folie mit einer Innen- und einer Außenseite, umfassend
einen ersten, insbesondere umlaufenden, Seitenrandabschnitt und einen gegenüberliegenden zweiten, insbesondere umlaufenden, Seitenrandabschnitt,
wobei die Außenseite des ersten Seitenrandabschnitts mindestens bereichsweise mit der Innenseite der ersten Seitenwand im Bereich der und/oder jenseits der ersten Felgenwulst in einem ersten Verbindungsbereich haftend verbunden ist und
wobei die Außenseite des zweiten Seitenrandabschnitts mindestens bereichsweise mit der Innenseite der zweiten Seitenwand im Bereich der und/oder jenseits der zweiten Felgenwulst in einem zweiten Verbindungsbereich haftend verbunden ist,
wobei der erste Verbindungsbereich sich in Richtung des, insbesondere maximal bis zum, zur ersten Seitenwand ausgerichteten Beginn der Abrollfläche sowie gegebenenfalls darüber hinaus erstreckt und/oder, insbesondere und,
wobei der zweite Verbindungsbereich sich in Richtung des, insbesondere maximal bis zum, zur zweiten Seitenwand ausgerichteten Beginn der Abrollfläche sowie gegebenenfalls darüber hinaus erstreckt,
wobei sich ein nicht mit der Innenseite von erster und zweiter Seitenwand verbundener Abschnitt der, insbesondere reversibel, dehnbare Folie zwischen dem
zum Felgenwulstabschluss der ersten Felgenwulst ausgerichteten Ende des ersten Verbindungsbereichs und dem zum Felgenwulstabschluss der zweiten Felgenwulst ausgerichteten Ende des zweiten Verbindungsbereichs erstreckt,
wobei der zwischen dem ersten und dem zweiten Verbindungsbereich liegende Abschnitt der, insbesondere reversibel, dehnbaren Folie eine laterale Erstreckung aufweist, die kleiner, gleich oder größer, bevorzugt die gleich oder kleiner, ist als der, besonders bevorzugt gleich ist mit dem, ohne äußere Krafteinwirkung gegebene(n) Abstand zwischen der ersten und der zweiten Felgenwulst. Hierbei kann dieser Abstand in der Weise ermittelt werden, dass man den Fahrradreifen mit seiner Lauffläche auf eine ebene Unterlage stellt und den Fahrradreifen in einer Weise ausrichtet, dass sein Durchmesser bzw. die durch den Fahrradreifen aufgespannte Kreisfläche senkrecht zu der ebenen Unterlage angeordnet ist. Um Ungenauigkeiten bei der Fertigung zu berücksichtigen, stellt der genannte Abstand zweckmäßigerweise sowie insbesondere bevorzugt den über den umlaufenden Fahrradreifen ermittelten durchschnittlichen Abstand dar.

Besonders bevorzugt hat demgemäß der zwischen dem ersten und dem zweiten Verbindungsbereich liegende Abschnitt der, insbesondere reversibel, dehnbaren Folie eine laterale Erstreckung, die gleich oder kleiner ist als der ohne äußere Krafteinwirkung gegebene Abstand zwischen der ersten und der zweiten Felgenwulst, wobei die laterale Erstreckung besonders bevorzugt gleich ist mit dem ohne äußere Krafteinwirkung gegebenen Abstand zwischen der ersten und der zweiten Felgenwulst.

Im Sinne der Erfindung wird der gegebene Abstand, den man auch als lichten Abstand bezeichnen kann, zwischen der ersten und der zweiten Felgenwulst zweckmäßigerweise ermittelt, wenn die, insbesondere reversibel, dehnbare Folie noch nicht über die ersten und zweiten Verbindungsbereiche mit der Innenseite der Reifenkarkasse verbunden ist. Denn würde diese Verbindung bereits vorliegen, würde bei einer Folie mit einem kleineren Abstand eine äußere Krafteinwirkung vorliegen.

Ein solcher erfindungsgemäßer schlauchloser Fahrradreifen ist besonders bevorzugt, umfassend eine Reifenkarkasse mit einer Abrollfläche und, einander gegenüberliegend, einer ersten Seitenwand, die sich bis zu einer ersten Felgenwulst mit einem Felgenwulstbeginn und einem Felgenwulstabschluss erstreckt, und einer zweiten Seitenwand, die sich bis zu einer zweiten Felgenwulst mit einem Felgenwulstbeginn und einem Felgenwulstabschluss erstreckt, wobei die Reifenkarkasse eine Außenseite und eine Innenseite aufweist, ferner umfassend
mindestens eine reversibel dehnbare, den Bereich zwischen erster und zweiter Felgenwulst überbrückende Folie mit einer Innen- und einer Außenseite, umfassend
einen ersten umlaufenden Seitenrandabschnitt und einen gegenüberliegenden zweiten umlaufenden Seitenrandabschnitt,
wobei die Außenseite des ersten Seitenrandabschnitts mindestens bereichsweise mit der Innenseite der ersten Seitenwand im Bereich der und/oder, insbesondere und, jenseits der ersten Felgenwulst in einem ersten Verbindungsbereich haftend verbunden ist und
wobei die Außenseite des zweiten Seitenrandabschnitts mindestens bereichsweise mit der Innenseite der zweiten Seitenwand im Bereich der und/oder, insbesondere und, jenseits der zweiten Felgenwulst in einem zweiten Verbindungsbereich haftend verbunden ist,
wobei der erste Verbindungsbereich sich in Richtung des, insbesondere maximal bis zum, zur ersten Seitenwand ausgerichteten Beginn der Abrollfläche sowie gegebenenfalls darüber hinaus erstreckt, und
wobei der zweite Verbindungsbereich sich in Richtung des, insbesondere maximal bis zum, zur zweiten Seitenwand ausgerichteten Beginn der Abrollfläche sowie gegebenenfalls darüber hinaus erstreckt,
wobei sich ein nicht mit der Innenseite von erster und zweiter Seitenwand verbundener Abschnitt der reversibel dehnbaren Folie zwischen dem
zum Felgenwulstabschluss der ersten Felgenwulst ausgerichteten Ende des ersten Verbindungsbereichs und dem zum Felgenwulstabschluss der zweiten Felgenwulst ausgerichteten Ende des zweiten Verbindungsbereichs erstreckt,
wobei der zwischen dem ersten und dem zweiten Verbindungsbereich liegende Abschnitt der reversibel dehnbaren Folie eine laterale Erstreckung aufweist, die gleich oder kleiner ist als der, bevorzugt gleich ist mit dem, ohne äußere Krafteinwirkung gegebene(n) Abstand zwischen der ersten und der zweiten Felgenwulst.

Die, insbesondere reversibel, dehnbare, Folie stellt in einer bevorzugten Ausführungsform einen umlaufenden, insbesondere ringförmigen, Folienstreifen dar. Dieser bevorzugte ringförmigen Folienstreifen kann aus einem Stück, also einstückig, gefertigt sein, z.B. herausgeschnitten oder -gestanzt aus einem Folienschlauch, oder durch Verklebung überlappender Folienenden des Folienstreifens. Hierbei ist die erstgenannte Ausführungsform bevorzugt; das Risiko von Undichtigkeiten ist hier nochmals niedriger.

Eine Folie ist zweckmäßigerweise dehnbar im Sinne der Erfindung, wenn sie bei Krafteinwirkung zerstörungsfrei längenveränderbar ist. Um reversibel dehnbar im Sinne der Erfindung zu sein, reicht es regelmäßig aus, dass die Folie bei Wegfall der dehnenden Krafteinwirkung sich wieder verkürzt, ohne dabei die ursprüngliche, kürzere Erstreckung wieder erreichen zu müssen, wobei letzteres gleichwohl bevorzugt ist.

Für eine Reihe an Anwendungen ist es ausreichend, auf eine dehnbare Folie zurückzugreifen, die nicht rückstellbar ist. Besonders vorteilhaft sind allerdings solche dehnbaren Folien, die rückstellbar sind, d.h. die über eine reversible Flexibilität verfügen wie sie z.B. von dem Material bekannt ist, aus dem Fahrradschläuche regelmäßig gefertigt werden.

In einer besonders vorteilhaften Ausführungsform umfasst der erfindungsgemäße Fahrradreifen ferner einen Ventilfuß (auch als Ventilschaft bekannt), der in die, insbesondere reversibel, dehnbare Folie integriert ist, bevorzugt unlösbar verbunden, besonders bevorzugt einvulkanisiert, in der Folie vorliegt. Der erfindungsgemäße Fahrradreifen ist in geeigneten Ausführungsformen ferner mit einem Ventil ausgestattet, welches vorzugsweise in dem Ventilfuß vorliegt.

Derartige erfindungsgemäßen Fahrradreifen haben sich als besonders zweckmäßig erwiesen, bei denen die, insbesondere reversibel, dehnbare Folie nicht über zwei Drittel der Erstreckung, insbesondere nicht über die Hälfte der Erstreckung, der ersten Seitenwand, gerechnet von dem Felgenwulstabschluss der ersten Felgenwulst bis zur Abrollfläche, hinausgeht. Alternativ sowie insbesondere zusätzlich kann dabei vorgesehen sein, dass die, insbesondere reversibel, dehnbaren Folie, nicht über zwei Drittel der Erstreckung, insbesondere nicht über die Hälfte der Erstreckung, der zweiten Seitenwand, gerechnet von dem der zweiten Felgenwulst bis zur Abrollfläche, hinausgeht.

Solche erfindungsgemäßen Fahrradreifen lösen die der Erfindung zugrunde liegende Aufgabe besonders vorteilhaft, bei denen der erste Verbindungsbereich nicht über zwei Drittel der Erstreckung, insbesondere nicht über die Hälfte der Erstreckung, der ersten Seitenwand, gerechnet von dem Felgenwulstabschluss der ersten Felgenwulst bis zur Abrollfläche, hinausgeht und/oder, insbesondere und, bei denen der zweite Verbindungsbereich nicht über zwei Drittel der Erstreckung, insbesondere nicht über die Hälfte der Erstreckung, der zweiten Seitenwand, gerechnet von dem der zweiten Felgenwulst bis zur Abrollfläche, hinausgeht.

Bei diesen Ausführungsformen ist es gleichwohl möglich, dass die, insbesondere reversibel, dehnbare Folie über den ersten und/oder, insbesondere und, zweiten Verbindungsbereich hinausgehen kann, ohne mit der Innenseite der Reifenkarkasse verbunden zu sein. Demgemäß kann mit dem erfindungsgemäßen Fahrradreifen die, insbesondere reversibel, dehnbare Folie in Richtung der Abrollfläche sich jeweils jenseits des ersten und/oder, insbesondere und, des zweiten Verbindungsbereichs erstrecken, ohne mit der Innenseite der Reifenkarkasse verbunden zu sein. Hierbei kann die, insbesondere reversibel, dehnbare Folie sich vorzugsweise jeweils jenseits des ersten und/oder, insbesondere und, des zweiten Verbindungsbereichs in einem Umfang erstrecken, der maximal der Erstreckung des ersten bzw. zweiten Verbindungsbereichs entspricht. Auch kann erfindungsgemäß vorgesehen sein, dass der sich jenseits des ersten Verbindungsbereichs erstreckende Abschnitt der, insbesondere reversibel, dehnbaren Folie und der sich jenseits des zweiten Verbindungsbereichs erstreckende Abschnitt der, insbesondere reversibel, dehnbaren Folie einstückig, insbesondere unter Ausbildung eines Schlauchs, ineinander übergehen. Diese nicht mit der Reifenkarkasse verbundenen Abschnitte der Folie können insbesondere dann zu einem nochmals gesteigerten Schutz beitragen, wenn bei starker mechanischer Beanspruchung die Seitenwand des Reifens gequetscht und an das Felgenhorn gepresst wird.

In ebenfalls zweckmäßigen Ausführungsformen kann demgemäß vorgesehen sein, dass der erste Verbindungsbereich sich über den Beginn der Abrollfläche hinaus erstreckt und dass der zweite Verbindungsbereich sich ebenfalls über den Beginn der Abrollfläche hinaus erstreckt, wobei der erste und der zweite Verbindungsbereich in dem von der Abrollfläche bedeckten Bereich der Innenseite der Reifenkarkasse aneinander anstoßen, einander überlappen oder, insbesondere einstückig, ineinander übergehen. Im letzteren Fall liegt die, insbesondere reversibel, dehnbare Folie zweckmäßigerweise in Form eines Schlauchs vor.

In einer bevorzugten Ausführungsform des erfindungsgemäßen Fahrradreifens beginnt der erste Verbindungsbereich am Felgenwulstabschluss oder am Felgenwulstbeginn der ersten Felgenwulst. Alternativ sowie insbesondere zusätzlich beginnt der zweite Verbindungsbereich am Felgenwulstabschluss oder am Felgenwulstbeginn der zweiten Felgenwulst. Vielfach hat es sich als ausreichend erwiesen, dass der erste Verbindungsbereich im Bereich des Felgenwulstbeginns, z.B. 2 bis 10 mm, bevorzugt 2 bis 5 mm, dies- oder jenseits des Felgenwulstbeginns, sowie vorzugsweise am Felgenwulstbeginn, der ersten Felgenwulst und dass der zweite Verbindungsbereich im Bereich des Felgenwulstbeginns, z.B. 2 bis 10 mm, bevorzugt 2 bis 5 mm, dies- oder jenseits des Felgenwulstbeginns, sowie vorzugsweise am Felgenwulstbeginn, der zweiten Felgenwulst beginnen. Bevorzugt ist dabei eine Ausführungsform, bei der der erste Verbindungsbereich am Felgenwulstbeginn der ersten Felgenwulst und bei der der zweite Verbindungsbereich am Felgenwulstbeginn der zweiten Felgenwulst beginnen. Ist der Folienstreifen am jeweiligen Felgenwulstbeginn bzw. im Bereich des Felgenwulstbeginns mit dem Fahrradreifen verbunden, insbesondere verklebt, kann besonders zuverlässig verhindert werden, dass das Felgenhorn, wenn bei starker mechanischer Beanspruchung der Fahrradreifen, insbesondere die Seitenwand, gegen dasselbe gedrückt wird, eine Beschädigung bewirkt, die zu einer Leckage führt.

Als ganz besonders vorteilhaft haben sich auch solche erfindungsgemäßen Fahrradreifen erwiesen, bei denen der zwischen dem ersten und dem zweiten Verbindungsbereich liegende Abschnitt, d.h. derjenige Abschnitt, der sich abgewandt von der Abrollfläche an die mit den Verbindungsbereichen verbundene Folie anschließt, diese, insbesondere reversibel, dehnbaren Folie eine maximale Erstreckung aufweist, die ausgelegt und eingerichtet ist, so dass die Folie ohne äußere Krafteinwirkung auf den Fahrradreifen sowie insbesondere im ungedehnten Zustand nicht über die Verbindungslinie von erstem und zweitem Felgenwulstabschluss hinausgeht. Bei dieser Ausführungsform liegt dieser sich zwischen den Verbindungsbereichen erstreckende Abschnitt der Folie schwerkraftgetrieben nicht an dem Felgenbett an, wodurch sich die Montage und Reparatur komplikationsfreier gestalten lässt. Die Breite des Felgenbetts liegt üblicherweise im Bereich von 2,0 bis 4,0 cm, bei Mountainbike-Reifen häufig im Bereich von etwa 3,0 cm.

Besonders zufriedenstellende Resultate lassen sich auch mit solchen bevorzugten Ausführungsformen des erfindungsgemäßen Fahrradreifens erzielen, bei denen die, insbesondere reversibel, dehnbare Folie im ersten und im zweiten Verbindungsbereich dicker ist als in dem zwischen dem ersten und dem zweiten Verbindungsbereich liegenden Abschnitt der Folie. Diese im Verbindungsbereich liegenden Abschnitte tragen häufig in besonderem Maße zur Dämpfung bei starker mechanischer Beanspruchung bei. Hierbei kann die, insbesondere reversibel, dehnbare Folie im ersten und im zweiten Verbindungsbereich vorzugsweise eine Dicke im Bereich von 0,1 bis 3,0 mm, bevorzugt im Bereich von 0,1 bis 2,0 mm und besonders bevorzugt von 0,1 bis 1,5 mm, aufweisen. Alternativ sowie insbesondere zusätzlich liegt in dem zwischen dem ersten und dem zweiten Verbindungsbereich liegenden Abschnitt die Dicke vorzugsweise im Bereich von 0,05 mm bis kleiner 1,0 mm, beispielsweise im Bereich von 0,1 bis 0,8 mm.

Hierbei haben sich insbesondere auch solche erfindungsgemäßen Fahrradreifen als besonders geeignet erwiesen, bei denen die, insbesondere reversibel, dehnbare Folie in demjenigen Abschnitt des ersten Verbindungsbereichs, der sich in Richtung der Abrollfläche an den Felgenwulstbeginn anschließt oder der mit dem Felgenwulstbeginn der ersten Felgenwulst beginnt, eine größere Dicke aufweist als in demjenigen Abschnitt, der nicht zum ersten und gegebenenfalls zweiten Verbindungsbereich gehört. Alternativ sowie insbesondere zusätzlich kann vorgesehen sein, dass die, insbesondere reversibel, dehnbare Folie in demjenigen Abschnitt des zweiten Verbindungsbereichs, der sich in Richtung der Abrollfläche an den Felgenwulstbeginn anschließt oder der mit dem Felgenwulstbeginn der zweiten Felgenwulst beginnt, eine größere Dicke aufweist als in demjenigen Abschnitt, der nicht zum zweiten und gegebenenfalls ersten Verbindungsbereich gehört.

In einer weiteren zweckmäßigen Ausführungsform kann vorgesehen sein, dass die, insbesondere reversibel, dehnbare Folie in demjenigen Abschnitt des ersten Verbindungsbereichs, der sich in Richtung der Abrollfläche an den Felgenwulstbeginn anschließt oder der mit dem Felgenwulstbeginn der ersten Felgenwulst beginnt, mehrlagig, insbesondere doppellagig, ausgestaltet ist. Alternativ sowie insbesondere zusätzlich kann vorgesehen sein, dass die, insbesondere reversibel, dehnbare Folie in demjenigen Abschnitt des zweiten Verbindungsbereichs, der sich in Richtung der Abrollfläche an den Felgenwulstbeginn anschließt oder der mit dem Felgenwulstbeginn der zweiten Felgenwulst beginnt, mehrlagig, insbesondere doppellagig, ist. Hierbei sind die aneinander anliegenden Lagen der mehrlagigen dehnbaren Folie ebenfalls miteinander verbunden, z.B. verklebt.

Der erfindungsgemäße Fahrradreifen umfasst in zweckmäßigen Ausgestaltungen ferner einen auf der Abrollfläche anliegenden umlaufenden Laufstreifen.

Die, insbesondere reversibel, dehnbare Folie des erfindungsgemäßen Fahrradreifens umfasst im Allgemeinen Butylkautschuk, Polyurethan und/oder Polyamid oder ist hieraus gebildet.

In dem erfindungsgemäßen Fahrradreifen liegen in besonders geeigneten Ausführungsformen in der ersten Felgenwulst und in der zweiten Felgenwulst jeweils mindestens ein Felgenwulstkern vor. Dieser Felgenwulstkern kann dabei insbesondere Metalldraht, Aramidfasern oder Carbonfasern umfassen ober hieraus bestehen. Bei Verwendung von Aramidfasern oder Carbonfasern kann man zu klappbaren erfindungsgemäßen Fahrradreifen gelangen.

In besonders geeigneten Ausführungsformen des erfindungsgemäßen Fahrradreifens erstreckt sich die, insbesondere reversibel, dehnbare Folie nicht bis auf die Außenseite der Reifenkarkasse.

Bei dem erfindungsgemäßen Fahrradreifen handelt es sich insbesondere um einen Mountainbike-Reifen, insbesondere einen Downhill-Mountainbike-Reifen, sowie um einen Gravelbike-Reifen. Ebenfalls kann es sich in sehr geeigneten Ausführungsformen bei den erfindungsgemäßen Fahrradreifen um Fahrradreifen, insbesondere schlauchlose Fahrradreifen, für E-Bikes handeln.

Die der Erfindung zugrunde liegende Aufgabe wird des Weiteren gelöst durch ein Kit-of-parts, umfassend einen erfindungsgemäßen Fahrradreifen und eine Fahrradfelge mit einem Felgenbett und zwei einander gegenüberliegenden ersten und zweiten Felgenhörnern.

Auch wird die der Erfindung zugrunde liegende Aufgabe gelöst durch ein Fahrradlaufrad, umfassend einen erfindungsgemäßen Fahrradreifen und eine Fahrradfelge mit einem Felgenbett und zwei einander gegenüberliegenden ersten und zweiten Felgenhörnern. Hierbei kann auch bereits vorgesehen sein, dass in dem Fahrradreifen Dichtmilch, insbesondere in Form einer wässrigen Latexemulsion, wie auch gegebenenfalls Fasern und/oder Granulat vorliegen. Insbesondere bei industrieller Serienfertigung der erfindungsgemäßen Fahrradlaufräder kann vorgesehen sein, dass die Fasern und/oder das Granulat in den Fahrradreifen gegeben werden, bevor der Folienstreifen aufgebracht wird. In dieser Ausführungsform kann die Dichtmilch anschließend über den Ventilschaft zugeführt werden, entweder ebenfalls während der industriellen Serienfertigung oder zu einem späteren Zeitpunkt durch den Nutzer des Fahrradlaufrads.

Solche erfindungsgemäßen Fahrradräder sind besonders bevorzugt, bei denen der erste Verbindungsbereich der, insbesondere reversibel, dehnbaren Folie sich bis zum ersten Felgenhorn oder bis jenseits, vorzugsweise bis jenseits, des ersten Felgenhorns und insbesondere nicht über den Felgenwulstabschluss des bzw. benachbart zum ersten Felgenhorn hinaus erstreckt. Alternativ sowie insbesondere zusätzlich kann vorgesehen sein, dass der zweite Verbindungsbereich der, insbesondere reversibel, dehnbaren Folie sich bis zum zweiten Felgenhorn oder bis jenseits, vorzugsweise bis jenseits, des zweiten Felgenhorns und insbesondere nicht über den Felgenwulstabschluss des bzw. benachbart zum zweiten Felgenhorn hinaus erstreckt.

Die der Erfindung zugrunde liegende Aufgabe wird des Weiteren gelöst durch ein Verfahren zur Herstellung eines erfindungsgemäßen Fahrradreifens, umfassend die Schritte
a) Zurverfügungstellung einer Reifenkarkasse mit einer Abrollfläche und, einander gegenüberliegend, einer ersten Seitenwand, die sich bis zu einer ersten Felgenwulst mit einem Felgenwulstabschluss erstreckt, und einer zweiten Seitenwand, die sich bis zu einer zweiten Felgenwulst mit einem Felgenwulstabschluss erstreckt, wobei die Reifenkarkasse eine Außenseite und eine Innenseite aufweist,
b) Zurverfügungstellung einer, insbesondere reversibel, dehnbaren Folie, enthaltend einen unlösbar mit der Folie verbundenen Ventilfuß, mit einander gegenüberliegenden ersten und zweiten Seitenrandabschnitten und mit einer longitudinalen Ausdehnung, die dem Umfang der Reifenkarkasse, insbesondere im Bereich der ersten und zweiten Felgenwülste, im Wesentlichen entspricht, und insbesondere mit einer lateralen Ausdehnung, die maximal der Summe aus der Erstreckung von erster und zweiter Seitenwand sowie der Erstreckung der Abrollfläche im Wesentlichen entspricht,
c) umlaufendes haftendes Verbinden der Außenseite des ersten Seitenrandabschnitts mit der Innenseite der Reifenkarkasse im Bereich der und/oder jenseits der ersten Felgenwulst in einem ersten Verbindungsbereich sowie
   umlaufendes haftendes Verbinden der Außenseite des zweiten Seitenrandabschnitts mit der Innenseite der Reifenkarkasse im Bereich der und/oder jenseits der zweiten Felgenwulst in einem zweiten Verbindungsbereich,
   wobei der erste Verbindungsbereich vorzugsweise sich maximal bis zum zur ersten Seitenwand ausgerichteten Beginn der Abrollfläche erstreckt und/oder, insbesondere und,
   wobei der zweite Verbindungsbereich vorzugsweise sich maximal bis zum zur zweiten Seitenwand ausgerichteten Beginn der Abrollfläche erstreckt,
   wobei vorzugsweise die Erstreckung für den zwischen dem ersten und dem zweiten Verbindungsbereich liegenden Abschnitt der, insbesondere reversibel, dehnbaren Folie derart gewählt wird, dass sie dem ohne äußere Krafteinwirkung gegebenen Abstand zwischen der ersten und der zweiten Felgenwulst entspricht oder kleiner oder größer ist als dieser Abstand, bevorzugt gleich oder kleiner ist als dieser Abstand und besonders bevorzugt gleich ist mit diesem Abstand.

Ein solches erfindungsgemäßes Verfahren zur Herstellung eines erfindungsgemäßen Fahrradreifens ist besonders bevorzugt, umfassend die Schritte
a) Zurverfügungstellung einer Reifenkarkasse mit einer Abrollfläche und, einander gegenüberliegend, einer ersten Seitenwand, die sich bis zu einer ersten Felgenwulst mit einem Felgenwulstabschluss erstreckt, und einer zweiten Seitenwand, die sich bis zu einer zweiten Felgenwulst mit einem Felgenwulstabschluss erstreckt, wobei die Reifenkarkasse eine Außenseite und eine Innenseite aufweist,
b) Zurverfügungstellung einer reversibel dehnbaren Folie, enthaltend einen unlösbar mit der Folie verbundenen Ventilfuß, mit einander gegenüberliegenden ersten und zweiten Seitenrandabschnitten und mit einer longitudinalen Ausdehnung, die dem Umfang der Reifenkarkasse im Bereich der ersten und zweiten Felgenwülste im Wesentlichen entspricht, und insbesondere mit einer lateralen Ausdehnung, die maximal der Summe aus der Erstreckung von erster und zweiter Seitenwand sowie der Erstreckung der Abrollfläche im Wesentlichen entspricht,
c) umlaufendes haftendes Verbinden der Außenseite des ersten Seitenrandabschnitts mit der Innenseite der Reifenkarkasse im Bereich der und/oder jenseits der ersten Felgenwulst in einem ersten Verbindungsbereich sowie
   umlaufendes haftendes Verbinden der Außenseite des zweiten Seitenrandabschnitts mit der Innenseite der Reifenkarkasse im Bereich der und/oder jenseits der zweiten Felgenwulst in einem zweiten Verbindungsbereich,
   wobei der erste Verbindungsbereich vorzugsweise sich maximal bis zum zur ersten Seitenwand ausgerichteten Beginn der Abrollfläche erstreckt und
   wobei der zweite Verbindungsbereich vorzugsweise sich maximal bis zum zur zweiten Seitenwand ausgerichteten Beginn der Abrollfläche erstreckt,
   wobei die Erstreckung für den zwischen dem ersten und dem zweiten Verbindungsbereich liegenden Abschnitt der reversibel dehnbaren Folie derart gewählt wird, dass sie dem ohne äußere Krafteinwirkung gegebenen Abstand zwischen der ersten und der zweiten Felgenwulst entspricht oder kleiner ist als dieser Abstand, bevorzugt gleich ist mit diesem Abstand.

Für das haftende Verbinden in Schritt c) kann man z.B. Cyanacrylat-Kleber einsetzen.

Die erfindungsgemäßen Fahrradreifen können insbesondere für Mountainbike-Laufräder, insbesondere für Downhill-Mountainbike-Laufräder, wie auch für Gravelbike-Laufräder, Enduro-Laufräder, All-Mountainbike-Laufräder und dergleichen eingesetzt werden.

Schließlich wird die der Erfindung zugrunde liegende Aufgabe gelöst durch einen Kit-of-parts, umfassend A) einen, insbesondere reversibel, dehnbaren, bevorzugt umlaufenden, besonders bevorzugt ringförmigen, Folienstreifen, insbesondere nach einem der vorangehenden Abschnitte, mit einer longitudinalen Ausdehnung, die dem Umfang einer Reifenkarkasse, insbesondere im Bereich der ersten und zweiten Felgenwülste, im Wesentlichen entspricht oder entspricht, und einer lateralen Ausdehnung, wobei in dem Folienstreifen ein Ventilfuß integriert, bevorzugt unlösbar verbunden, besonders bevorzugt einvulkanisiert, ist, und B) einen Kleber, eingerichtet und ausgelegt, um den Folienstreifen mit der Innenseite einer Fahrradreifenkarkasse haftend zu verbinden

Mit der vorliegenden Erfindung geht die überraschende Erkenntnis einher, dass sich mit dem erfindungsgemäßen Fahrradreifen zuverlässig realisieren lässt, dass sich in der Luftkammer auch eines erfindungsgemäßen schlauchlosen Fahrradreifens ein konstanter Luftdruck aufrechterhalten lässt, und zwar unabhängig davon, ob sich der Reifen auf der Felge verschiebt oder ob die Felge, z.B. aufgrund mechanischer Beanspruchung, Dellen oder sonstige Beschädigungen aufweist. Mit anderen Worten, bei Verformung des Felgenhorns muss ein Luftverlust nicht mehr befürchtet werden. Insbesondere lässt sich der Luftverlust durch *Burping*, vor allem auch bei Downhill-Einsätzen, vollständig unterbinden. Als besonders vorteilhaft hat sich überdies erwiesen, dass auch bei der Demontage in den Reifen abgefüllte Dichtmilch in diesem verbleibt. Überdies lässt sich hierdurch eine Verschmutzung der Felge durch austretende Dichtmilch vermeiden. Des Weiteren hat sich als ein überraschender Vorteil herausgestellt, dass sich der erfindungsgemäße Reifen problemlos auf eine Fahrradfelge montieren lässt; insbesondere ist es bei schlauchlosen Reifen nicht mehr erforderlich, sogleich den Reifen mit einem hohen Druck zu befüllen, um ein Anpressen der Felgenwulst an das Felgenhorn sicherzustellen. Als überraschend zweckmäßig hat sich überdies herausgestellt, dass dadurch, dass beim befüllten Reifen der zwischen dem ersten und zweiten Verbindungsabschnitt vorliegende Abschnitt der dehnbaren Folie an das Felgenbett gepresst wird, das Durchrutschen bzw. relative Verschieben des Reifens auf der Felge verhindert werden kann, z.B. bei abrupten Bremsvorgängen oder starker mechanischer Beanspruchung bei Downhill-Rennen. Auf diese Weise kann überdies sichergestellt werden, dass das Ventil bewegungsinvariant in seiner ursprünglichen Position verbleibt. Hierdurch wird eine bei gattungsgemäßen Fahrradrädern häufig anzutreffende Leckage wirkungsvoll unterbunden. Als vorteilhaft insbesondere auch für den Laien hat sich auch erwiesen, dass der erfindungsgemäße Fahrradreifen unproblematisch aufgezogen bzw. ausgewechselt werden kann. Dies trifft insbesondere auch auf schlauchlose Fahrradreifen zu. Von ganz besonderem Vorteil, insbesondere auch bei der schlauchlosen Variante des erfindungsgemäßen Fahrradreifens, ist auch, dass dieser mit einem sehr geringen Druck gefahren werden kann, z.B. im Bereich von 0,3 bis 2,0 bar. Diese sehr geringen Drücke tragen insbesondere auch bei anspruchsvollen Mountainbike-Strecken zu einer Erhöhung der Fahrsicherheit bei. Darüber hinaus erlauben die erfindungsgemäßen Fahrradreifen, insbesondere die schlauchlosen Fahrradreifen, ein komplikationsfreies Befüllen mit Fasern auch schon während des industriellen Produktionsprozesses. Hierdurch kann eine nochmals verbesserte Dichtigkeit insbesondere eines schlauchlosen Fahrradreifens wie auch ein verbesserter Verschluss von Löchern in Kombination mit dem Einsatz von Dichtmilch ermöglicht werden.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: einen Querschnitt des Fahrradreifens einer ersten Ausführungsform eines erfindungsgemäßen Fahrradreifens und
- Figur 2: einen Querschnitt des Fahrradreifens einer zweiten Ausführungsform eines erfindungsgemäßen Fahrradreifens.

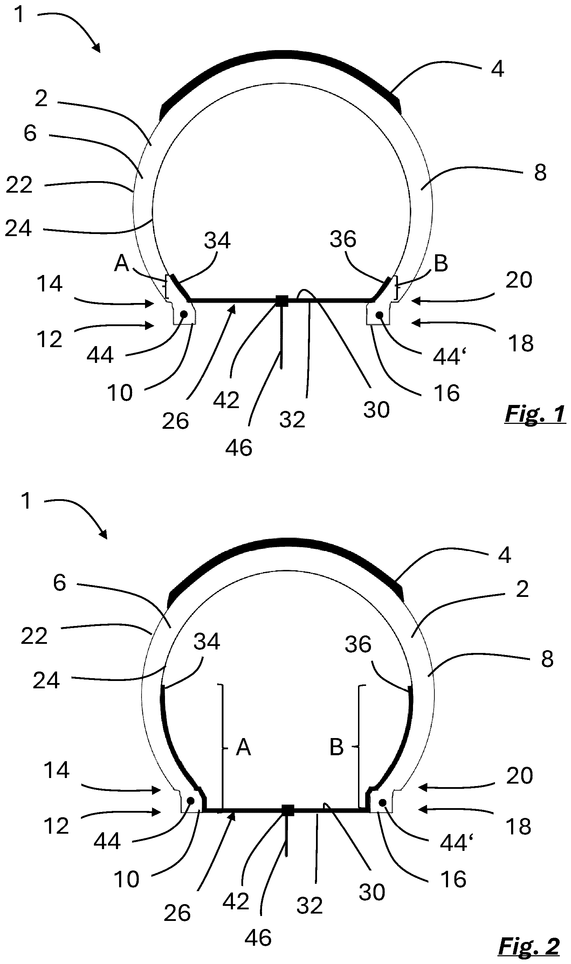

Figur 1 zeigt einen Querschnitt einer Ausführungsform des erfindungsgemäßen Fahrradreifens. Der gezeigte Fahrradreifen 1 umfasst eine Reifenkarkasse 2 mit einer Abrollfläche 4, einer Außenseite 22 und einer Innenseite 24 und, einander gegenüberliegend, eine erste Seitenwand 6, die sich bis zu einer ersten Felgenwulst 10 mit einem Felgenwulstbeginn 12 und einem Felgenwulstabschluss 14 erstreckt, und eine zweite Seitenwand 8, die sich bis zu einer zweiten Felgenwulst 16 mit einem Felgenwulstbeginn 18 und einem Felgenwulstabschluss 20 erstreckt. Die erste Felgenwulst 10 und die zweite Felgenwulst 16 weisen jeweils einen Felgenwulstkern 44, 44' auf. Ferner umfasst der Fahrradreifen der Figur 1 eine den Bereich zwischen erster und zweiter Felgenwulst 16 überbrückende Folie 26 mit einer Innen- 30 und einer Außenseite 32. Die Folie 26 verfügt ferner über einen ersten Seitenrandabschnitt 34 und einen gegenüberliegenden zweiten Seitenrandabschnitt 36, wobei die Außenseite 32 des ersten Seitenrandabschnitts 34 mit der Innenseite 24 der ersten Seitenwand 6 jenseits der ersten Felgenwulst 10 in einem ersten Verbindungsbereich A haftend verbunden ist und wobei die Außenseite 32 des zweiten Seitenrandabschnitts 36 mit der Innenseite 24 der zweiten Seitenwand 8 jenseits der zweiten Felgenwulst 16 in einem zweiten Verbindungsbereich B haftend verbunden ist. Die Folie 26 umfasst ferner einen Abschnitt, der nicht mit der Innenseite 24 von erster und zweiter Seitenwand 6, 8 verbunden ist. Dieser Abschnitt erstreckt sich zwischen dem zum Felgenwulstabschluss 14 der ersten Felgenwulst 10 ausgerichteten Ende des ersten Verbindungsbereichs A und dem zum Felgenwulstabschluss 20 der zweiten Felgenwulst 16 ausgerichteten Ende des zweiten Verbindungsbereichs B. Die Folie weist ferner einen integrierten Ventilfuß 42 auf, in dem ein Ventil 46 vorliegt.

Die in Figur 2 gezeigte Ausführungsform des erfindungsgemäßen Fahrradreifens unterscheidet sich zum einen dadurch von der in Figur 1 gezeigten Ausführungsform, dass sich die beiden Seitenrandabschnitte 34, 36 der Folie 26 weiter in Richtung der Abrollfläche 4 erstrecken, im gezeigten Fall bis zur ca. halben Höhe des Querschnitts des Fahrradreifens 1. Zum anderen unterscheidet sich Figur 2 dadurch von der in Figur 1 gezeigten Ausführungsform, dass die Außenseite 32 des ersten Seitenrandabschnitts 34 ferner mit der Innenseite 24 der ersten Seitenwand 6 im Bereich der ersten Felgenwulst 10 haftend verbunden ist und dadurch, dass die Außenseite des zweiten Seitenrandabschnitts 36 mit der Innenseite 24 der zweiten Seitenwand 8 im Bereich der der zweiten Felgenwulst 16 haftend verbunden ist. Die Verbindungsbereiche A und B sind somit deutlich größer als die in Figur 1 gezeigten.

Bei den in den Figuren 1 und 2 gezeigten Ausführungsformen, ist die Folie 26 entlang der gesamten Länge der Verbindungsbereiche A und B über die Außenseite 32 mit der Innenseite der Reifenkarkasse 2 haftend verbunden.

Ferner erstreckt sich bei den in den Figuren 1 und 2 gezeigten Ausführungsformen die Folie 26 nicht bis auf die Außenseite der Reifenkarkasse. Außerdem weist bei den in den Figuren 1 und 2 gezeigten Ausführungsformen der zwischen dem ersten und dem zweiten Verbindungsbereich A, B liegende Abschnitt der Folie 26 eine maximale Erstreckung auf, die ohne äußere Krafteinwirkung auf den Fahrradreifen nicht über die Verbindungslinie von erstem und zweitem Felgenwulstabschluss hinausgeht. In diesen Ausführungsformen liegt die Folie bevorzugt ungedehnt vor.

Für viele Anwendungen hat sich die Ausführungsform gemäß Figur 1 als besonders zweckmäßig und auch als bevorzugt gegenüber der Ausführungsform der Figur 2 erwiesen.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

### Bezugszeichenliste

- 1: Fahrradreifen
- 2: Reifenkarkasse
- 4: Abrollfläche
- 6: erste Seitenwand
- 8: zweite Seitenwand
- 10: erster Felgenwulst
- 12: Felgenwulstbeginn des erste Felgenwulst
- 14: Felgenwulstabschluss des erste Felgenwulst
- 16: zweiter Felgenwulst
- 18: Felgenwulstbeginn des zweiten Felgenwulst
- 20: Felgenwulstabschluss des zweiten Felgenwulst
- 22: Außenseite der Reifenkarkasse
- 24: Innenseite der Reifenkarkasse
- 26: Folie
- 30: Innenseite der Folie
- 32: Außenseite der Folie
- 34: erster Seitenrandabschnitt
- 36: zweiter Seitenrandabschnitt
- 42: Ventilfuß
- (44,44'): Fegenwulstkern
- 46: Ventil

- A: erster Verbindungsbereich
- B: zweiter Verbindungsbereich

## Patentansprüche

1. Fahrradreifen, insbesondere schlauchloser Fahrradreifen, wie Mountainbike- oder Gravelbike-Reifen, umfassend
eine Reifenkarkasse mit einer Abrollfläche und, einander gegenüberliegend, einer ersten Seitenwand, die sich bis zu einer ersten Felgenwulst mit einem Felgenwulstbeginn und einem Felgenwulstabschluss erstreckt, und einer zweiten Seitenwand, die sich bis zu einer zweiten Felgenwulst mit einem Felgenwulstbeginn und einem Felgenwulstabschluss erstreckt,
wobei die Reifenkarkasse eine Außenseite und eine Innenseite aufweist,
ferner umfassend
mindestens eine, insbesondere reversibel, dehnbare, den Bereich zwischen erster und zweiter Felgenwulst überbrückende Folie mit einer Innen- und einer Außenseite, umfassend
einen ersten, insbesondere umlaufenden, Seitenrandabschnitt und einen gegenüberliegenden zweiten, insbesondere umlaufenden, Seitenrandabschnitt, wobei die Außenseite des ersten Seitenrandabschnitts mindestens bereichsweise mit der Innenseite der ersten Seitenwand im Bereich der und/oder jenseits der ersten Felgenwulst in einem ersten Verbindungsbereich haftend verbunden ist und wobei die Außenseite des zweiten Seitenrandabschnitts mindestens bereichsweise mit der Innenseite der zweiten Seitenwand im Bereich der und/oder jenseits der zweiten Felgenwulst in einem zweiten Verbindungsbereich haftend verbunden ist, wobei der erste Verbindungsbereich sich in Richtung des, insbesondere maximal bis zum, zur ersten Seitenwand ausgerichteten Beginn(s) der Abrollfläche sowie gegebenenfalls darüber hinaus erstreckt und/oder, insbesondere und,
wobei der zweite Verbindungsbereich sich in Richtung des, insbesondere maximal bis zum, zur zweiten Seitenwand ausgerichteten Beginn(s) der Abrollfläche sowie gegebenenfalls darüber hinaus erstreckt,
wobei sich ein nicht mit der Innenseite von erster und zweiter Seitenwand verbundener Abschnitt der, insbesondere reversibel, dehnbaren Folie zwischen dem zum Felgenwulstabschluss der ersten Felgenwulst ausgerichteten Ende des ersten Verbindungsbereichs und dem zum Felgenwulstabschluss der zweiten Felgenwulst ausgerichteten Ende des zweiten Verbindungsbereichs erstreckt,
wobei dieser zwischen dem ersten und dem zweiten Verbindungsbereich liegende Abschnitt der, insbesondere reversibel, dehnbaren Folie eine laterale Erstreckung aufweist, die kleiner, gleich oder größer, bevorzugt die gleich oder kleiner, ist als der gegebene Abstand zwischen der ersten und der zweiten Felgenwulst.

2. Fahrradreifen nach Anspruch 1, ferner umfassend
einen Ventilfuß, der in die, insbesondere reversibel, dehnbare Folie integriert ist, bevorzugt unlösbar verbunden, besonders bevorzugt einvulkanisiert, in der Folie vorliegt, und gegebenenfalls ein Ventil, insbesondere in dem Ventilfuß vorliegend.

3. Fahrradreifen nach Anspruch 1 oder 2, **dadurch gekennzeichnet, dass**
der erste Verbindungsbereich, und insbesondere die, insbesondere reversibel, dehnbaren Folie, nicht über zwei Drittel der Erstreckung, insbesondere nicht über die Hälfte der Erstreckung, der ersten Seitenwand, gerechnet von dem Felgenwulstabschluss der ersten Felgenwulst bis zur Abrollfläche, hinausgeht und/oder, insbesondere und,
der zweite Verbindungsbereich, und insbesondere die, insbesondere reversibel, dehnbaren Folie, nicht über zwei Drittel der Erstreckung, insbesondere nicht über die Hälfte der Erstreckung, der zweiten Seitenwand, gerechnet von dem Felgenwulstabschluss der zweiten Felgenwulst bis zur Abrollfläche, hinausgeht.

4. Fahrradreifen nach Anspruch 1 oder 2, **dadurch gekennzeichnet, dass**
der erste Verbindungsbereich sich über den Beginn der Abrollfläche hinaus erstreckt und dass der zweite Verbindungsbereich sich über den Beginn der Abrollfläche hinaus erstreckt, wobei der erste und der zweite Verbindungsbereich in dem von der Abrollfläche bedeckten Bereich aneinander anstoßen, einander überlappen oder, insbesondere einstückig, ineinander übergehen.

5. Fahrradreifen nach einem der vorausgehenden Ansprüche, **dadurch gekennzeichnet, dass**
der erste Verbindungsbereich am Felgenwulstabschluss oder am Felgenwulstbeginn der ersten Felgenwulst beginnt und/oder, insbesondere und, dass der zweite Verbindungsbereich am Felgenwulstabschluss oder am Felgenwulstbeginn der zweiten Felgenwulst beginnt,
wobei bevorzugt der erste Verbindungsbereich am Felgenwulstbeginn oder im Bereich des Felgenwulstbeginns der ersten Felgenwulst beginnt und/oder, insbesondere und, wobei bevorzugt der zweite Verbindungsbereich am Felgenwulstbeginn oder im Bereich des Felgenwulstbeginns der zweiten Felgenwulst beginnt.

6. Fahrradreifen nach einem der vorausgehenden Ansprüche, **dadurch gekennzeichnet, dass**
der zwischen dem ersten und dem zweiten Verbindungsbereich liegende Abschnitt der, insbesondere reversibel, dehnbaren Folie eine maximale Erstreckung aufweist, die ausgelegt und eingerichtet ist, so dass die Folie ohne äußere Krafteinwirkung auf den Fahrradreifen sowie insbesondere im ungedehnten Zustand nicht über die Verbindungslinie von erstem und zweitem Felgenwulstabschluss hinausgeht

7. Fahrradreifen nach einem der vorausgehenden Ansprüche, **dadurch gekennzeichnet, dass**
die, insbesondere reversibel, dehnbare Folie im ersten und im zweiten Verbindungsbereich dicker ist als in dem zwischen dem ersten und dem zweiten Verbindungsbereich liegenden Abschnitt, wobei
die, insbesondere reversibel, dehnbare Folie im ersten und im zweiten Verbindungsbereich vorzugsweise eine Dicke im Bereich von 0,1 bis 3,0 mm, bevorzugt im Bereich von 0,1 bis 2,0 mm und besonders bevorzugt von 0,1 bis 1,5 mm, und in dem zwischen dem ersten und dem zweiten Verbindungsbereich liegenden Abschnitt vorzugsweise eine Dicke im Bereich von 0,05 mm bis kleiner 1,0 mm aufweist, und/oder, insbesondere und
dass
die, insbesondere reversibel, dehnbare Folie in demjenigen Abschnitt des ersten Verbindungsbereichs, der sich in Richtung der Abrollfläche an den Felgenwulstbeginn anschließt oder der mit dem Felgenwulstbeginn der ersten Felgenwulst beginnt, eine größere Dicke aufweist als in demjenigen Abschnitt, der nicht zum ersten Verbindungsbereich gehört, und/oder, insbesondere und, dass die, insbesondere reversibel, dehnbare Folie in demjenigen Abschnitt des zweiten Verbindungsbereichs, der sich in Richtung der Abrollfläche an den Felgenwulstbeginn anschließt oder der mit dem Felgenwulstbeginn der zweiten Felgenwulst beginnt, eine größere Dicke aufweist als in demjenigen Abschnitt, der nicht zum zweiten Verbindungsbereich gehört,
und/oder, insbesondere und,
dass die, insbesondere reversibel, dehnbare Folie in demjenigen Abschnitt des ersten Verbindungsbereichs, der sich in Richtung der Abrollfläche an den Felgenwulstbeginn anschließt oder der mit dem Felgenwulstbeginn der ersten Felgenwulst beginnt, mehrlagig, insbesondere doppellagig, ist, und/oder,
insbesondere und, dass die, insbesondere reversibel, dehnbare Folie in demjenigen Abschnitt des zweiten Verbindungsbereichs, der sich in Richtung der Abrollfläche an den Felgenwulstbeginn anschließt oder der mit dem Felgenwulstbeginn der zweiten Felgenwulst beginnt, mehrlagig, insbesondere doppellagig, ist.

8. Fahrradreifen nach einem der vorausgehenden Ansprüche, **dadurch gekennzeichnet, dass**
die, insbesondere reversibel, dehnbare Folie Butylkautschuk, Polyurethane und/oder Polyamide umfasst oder hieraus gebildet ist.

9. Fahrradreifen nach einem der vorausgehenden Ansprüche, **dadurch gekennzeichnet, dass**
die, insbesondere reversibel, dehnbare Folie in Richtung der Abrollfläche sich jeweils jenseits des ersten und/oder, insbesondere und, des zweiten Verbindungsbereichs erstreckt, ohne mit der Innenseite der Reifenkarkasse verbunden zu sein, wobei vorzugsweise
die, insbesondere reversibel, dehnbare Folie sich jeweils jenseits des ersten und/oder, insbesondere und, des zweiten Verbindungsbereichs in einem Umfang erstreckt, der maximal der Erstreckung des ersten bzw. zweiten Verbindungsbereichs entspricht, oder wobei vorzugsweise der sich jenseits des ersten Verbindungsbereichs erstreckende Abschnitt der, insbesondere reversibel, dehnbaren Folie und der sich jenseits des zweiten Verbindungsbereichs erstreckende Abschnitt der, insbesondere reversibel, dehnbaren Folie einstückig, insbesondere unter Ausbildung eines Schlauchs, ineinander übergehen.

10. Fahrradreifen nach einem der vorausgehenden Ansprüche, **dadurch gekennzeichnet, dass**
die, insbesondere reversibel, dehnbare Folie sich nicht bis auf die Außenseite der Reifenkarkasse erstreckt, insbesondere nicht über den Felgenwulstabschluss hinausgeht.

11. Fahrradreifen nach einem der vorausgehenden Ansprüche, **dadurch gekennzeichnet, dass**
die, insbesondere reversibel, dehnbare, Folie einen umlaufenden, insbesondere ringförmigen, Folienstreifen darstellt.

12. Fahrradlaufrad, umfassend einen Fahrradreifen, insbesondere einen schlauchlosen Fahrradreifen, nach einem der Ansprüche 1 bis 11 und eine Fahrradfelge mit einem Felgenbett und zwei einander gegenüberliegenden ersten und zweiten Felgenhörnern.

13. Fahrradlaufrad nach Anspruch 12, **dadurch gekennzeichnet, dass** der erste Verbindungsbereich der, insbesondere reversibel, dehnbaren Folie sich bis zum ersten Felgenhorn oder bis jenseits des ersten Felgenhorns erstreckt und/oder, insbesondere und, dass der zweite Verbindungsbereich der, insbesondere reversibel, dehnbaren Folie sich bis zum zweiten Felgenhorn oder bis jenseits des zweiten Felgenhorns erstreckt.

14. Fahrradlaufrad nach Anspruch 12 oder 13, ferner umfassend in dem Fahrradreifen vorliegende Dichtmilch und gegebenenfalls Fasern und/oder Granulat oder in dem Fahrradreifen vorliegende Fasern und/oder Granulat.

15. Verfahren zur Herstellung eines Fahrradreifens gemäß einem der Ansprüche 1 bis 11, umfassend die Schritte
a) Zurverfügungstellung einer Reifenkarkasse mit einer Abrollfläche und, einander gegenüberliegend, einer ersten Seitenwand, die sich bis zu einer ersten Felgenwulst mit einem Felgenwulstabschluss erstreckt, und einer zweiten Seitenwand, die sich bis zu einer zweiten Felgenwulst mit einem Felgenwulstabschluss erstreckt, wobei die Reifenkarkasse eine Außenseite und eine Innenseite aufweist,
b) Zurverfügungstellung einer, insbesondere reversibel, dehnbaren Folie, enthaltend einen unlösbar mit der Folie verbundenen Ventilfuß, mit einander gegenüberliegenden ersten und zweiten Seitenrandabschnitten und mit einer longitudinalen Ausdehnung, die dem Umfang der Reifenkarkasse, insbesondere im Bereich der ersten und zweiten Felgenwülste, im Wesentlichen entspricht, und insbesondere mit einer lateralen Ausdehnung, die maximal der Summe aus der Erstreckung von erster und zweiter Seitenwand sowie der Erstreckung der Abrollfläche im Wesentlichen entspricht,
c) umlaufendes haftendes Verbinden der Außenseite des ersten Seitenrandabschnitts mit der Innenseite der Reifenkarkasse im Bereich der und/oder jenseits der ersten Felgenwulst in einem ersten Verbindungsbereich, insbesondere unter Verwendung eines Cyanacrylat-Klebers, sowie
umlaufendes haftendes Verbinden der Außenseite des zweiten Seitenrandabschnitts mit der Innenseite der Reifenkarkasse im Bereich der und/oder jenseits der zweiten Felgenwulst in einem zweiten Verbindungsbereich, insbesondere unter Verwendung eines Cyanacrylat-Klebers,
wobei der erste Verbindungsbereich vorzugsweise sich maximal bis zum zur ersten Seitenwand ausgerichteten Beginn der Abrollfläche erstreckt und/oder, insbesondere und,
wobei der zweite Verbindungsbereich vorzugsweise sich maximal bis zum zur zweiten Seitenwand ausgerichteten Beginn der Abrollfläche erstreckt, wobei die Erstreckung für den zwischen dem ersten und dem zweiten Verbindungsbereich liegenden Abschnitt der, insbesondere reversibel, dehnbaren Folie derart gewählt wird, dass sie dem gegebenen Abstand zwischen der ersten und der zweiten Felgenwulst entspricht oder kleiner oder größer ist als dieser Abstand.

16. Verwendung des Fahrradreifens nach einem der Ansprüche 1 bis 11 für Gravelbike-Laufräder und/oder Mountainbike-Laufräder, insbesondere für Downhill-Mountainbike-Laufräder, oder für E-Bike-Laufräder, insbesondere E-Gravelbike-Laufräder und/oder E-Mountainbike-Laufräder.

17. Kit-of-parts, umfassend A) einen, insbesondere reversibel, dehnbaren, bevorzugt umlaufenden, besonders bevorzugt ringförmigen, Folienstreifen, insbesondere gemäß einem der Ansprüche 1 bis 11, mit einer longitudinalen Ausdehnung, die dem Umfang einer Reifenkarkasse, insbesondere im Bereich der ersten und zweiten Felgenwülste, im Wesentlichen entspricht oder entspricht, und einer lateralen Ausdehnung, wobei in dem Folienstreifen ein Ventilfuß integriert, bevorzugt unlösbar verbunden, besonders bevorzugt einvulkanisiert, ist, und B) einen Kleber, eingerichtet und ausgelegt, um den Folienstreifen mit der Innenseite einer Fahrradreifenkarkasse, insbesondere eines Gravelbike-Laufrads, Mountainbike-Laufrads oder E-Bike-Laufrads wie E-Gravelbike-Laufrads oder E-Mountainbike-Laufrads, haftend zu verbinden.
